# EUROPEAN PATENT APPLICATION

(11) **EP 4 796 394 A1**
(43) Date of publication of application: **26.08.2026**
(21) Application number: 26155916.5
(22) Date of filing: 03.02.2026
(51) Int. Cl.: B60T 7/12, B60T 13/22, B60T 13/66, B60T 13/68, B60T 17/22

(54) **AUTONOMY ENABLEMENT SYSTEM AND METHOD FOR A VEHICLE**

(30) Priority: 07.02.2025 US 202563755688 P; 24.09.2025 US 202519338512
(71) Applicant: Deere & Company, Moline, IL 61265 (US)
(72) Inventor: Schmidt, Martin, Mannheim (DE); Lawton, Kyle, Mannheim (DE); Tott, Jeffrey M., Mannheim (DE); Tagtow, Jordan L., Mannheim (DE); Berberich, Jessica, Mannheim (DE); Short, Megan L., Mannheim (DE)
(74) Representative: Dehnhardt, Florian Christopher

(57) **Abstract**

An autonomy enablement system for a vehicle (100) comprises at least one controller configured to determine the vehicle (100) is conditioned for autonomy, the vehicle (100) being conditioned for autonomy when at least a manual brake is engaged, enable autonomy in response to the determination that the vehicle (100) is conditioned for autonomy, and engage a redundant brake in response to the enablement of autonomy.

## Description

The present invention refers to an autonomy enablement system for a vehicle.

Vehicles, such as tractors, are being designed to operate autonomously. Accordingly, an autonomy enablement system for a vehicle is provided, comprising at least one controller configured to determine the vehicle is conditioned for autonomy, the vehicle being conditioned for autonomy when at least a manual brake is engaged, enable autonomy in response to the determination that the vehicle is conditioned for autonomy, and engage a redundant brake in response to the enablement of autonomy.

Example embodiments will be more clearly understood from the following detailed description taken in conjunction with the accompanying drawings. FIGS. 1-8 represent non-limiting, example embodiments as described herein:
- FIG. 1 A: is a component diagram of a vehicle, according to some example embodiments,
- FIG. 1B: is a schematic diagram of the vehicle of FIG. IA, according to some example embodiments,
- FIG. 2: is a block diagram of an autonomy enablement system, according to some example embodiments,
- FIG. 3: is a perspective view of a vehicle including a brake system, according to some example embodiments,
- FIG. 4: is a perspective view of the brake system of FIG. 3, according to some example embodiments,
- FIG. 5: is a perspective view of the brake system of FIG. 3, according to some example embodiments,
- FIG. 6: is a cross-sectional view of a redundant brake of the brake system of FIG. 3, according to some example embodiments,
- FIG. 7: is a flow chart of a method of operating an autonomy enablement system, according to some example embodiments, and
- FIG. 8: is a block diagram of an autonomy enablement system according to one or more example embodiments.

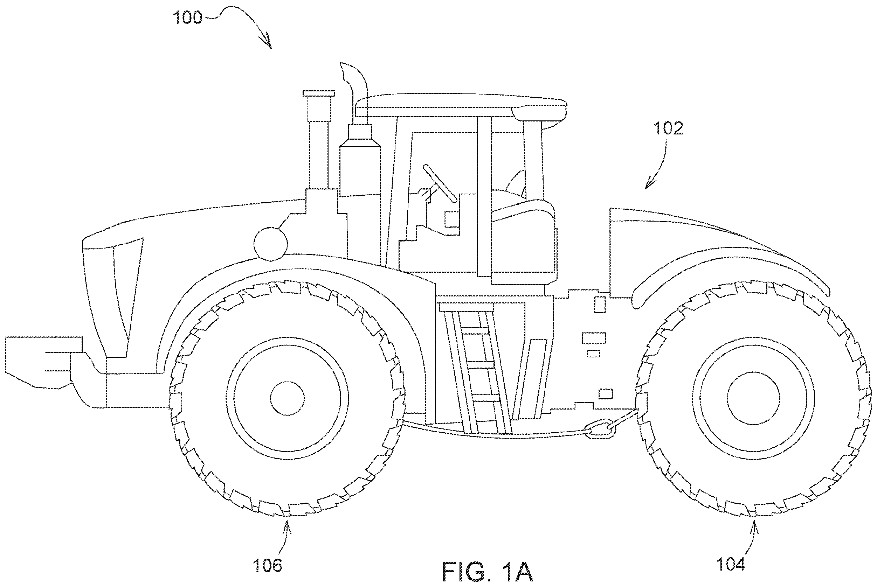

FIG. 1A illustrates an example vehicle that may utilize one or more portions of the aspects and examples described herein.

A vehicle 100, such as a tractor, can perform different operations, such as a ground working operation in a field. In some implementations, the vehicle 100 has wheels 104, 106 installed thereon. In other implementations, the vehicle 100 has track systems (not shown) instead of wheels installed on the rear or both the front and rear of the vehicle 100.

The vehicle 100 includes a chassis 102, which provides attachment points for the vehicle 100. For example, a work tool (e.g., a bucket, fork, blade, auger, or hammer) can be connected to the front or back of the chassis 102. The work tool is movably connected to the chassis 102 in some examples.

The vehicle 100 further includes a brake system as described in more detail herein. For example, the brake system is configured to autonomously apply the brakes and slow or stop the vehicle 100, such as to apply brake force(s) to control vehicle train speed, slow the vehicle train, bring the vehicle 100 to a complete stop in the work cycle, or when an object is detected near the tractor and/or implement.

While various examples are described in connection with a tractor or control arrangement having a particular configuration, the systems and methods described herein may also be utilized with other types of vehicles and implements. For example, the vehicle may comprise another utility-type vehicle, such as a truck, hauler, semi-tractor, or any vehicle that uses a brake system, such as any vehicle with one or more brakes. For example, one or more herein described aspects can be implemented in a work vehicle, such as a backhoe loader, but may be any work vehicle with a brake system, such as an articulated dump truck, compact track loader, crawler (e.g., crawler dozer, crawler loader), excavator, feller buncher, forwarder, harvester, knuckle boom loader, motor grader, scraper, skidder, sprayer, skid steer, tractor, tractor loader, and wheel loader, among others. The various examples can also be implemented in other work vehicles, passenger vehicles, or other equipment having brakes.

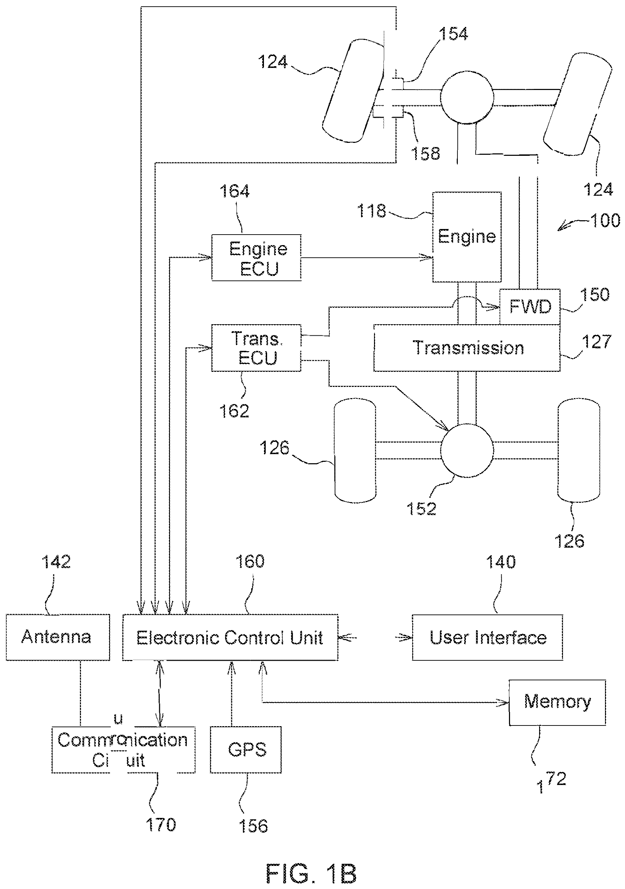

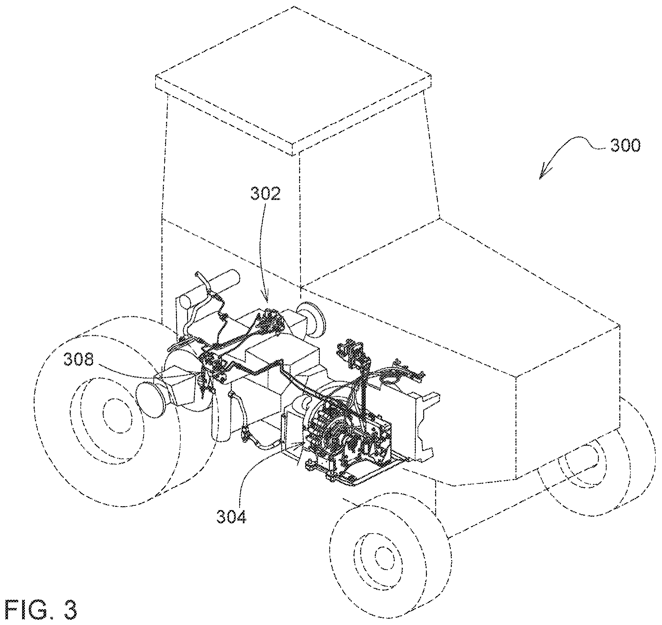

FIG. 1B is a simplified schematic diagram of the vehicle 100 and a control system according to one or more example embodiments. The transmission 127 includes an electronically controlled front wheel drive control unit 150 and an electronically controlled differential lock control unit 152. The front wheel drive control unit 150 is coupled to the steerable front wheels 124. When the front wheel drive control unit 150 is on, torque is transmitted from the transmission 127 to the front wheels 124. When the front wheel drive control unit 150 is off, torque is not transmitted from the transmission to the front wheels 124. As will be described herein, a redundant brake, not illustrated in FIG. IB but illustrated in at least FIG. 3, is coupled between the transmission 127 and the front wheel drive control unit 150.

The differential lock control unit 152 is coupled to the driven rear wheels 126. When the differential lock control unit 152 is unlocked (off, open differential), it allows each of the rear wheels 126 to rotate at different speeds, such as when negotiating a tum. By contrast, when the differential lock control unit 152 is on or locked, it forces both left and right wheels on the same axle to rotate at the same speed under nearly all circumstances.

A wheel angle sensor 154 senses the angular position of the front wheels 124. A GPS unit 156 provides a vehicle position signal. A wheel speed sensor 158 provides a wheel speed signal.

A main electronic control unit (ECU) 160 is connected to the wheel angle sensor 154, the GPS unit 156 and the wheel speed sensor 158. The ECU 160 communicates with a transmission ECU 162 and with an engine ECU 164.

The transmission ECU 162 controls the transmission 127 and provides control signals to the front wheel drive control unit 150 and to the differential lock control unit 152. In some example embodiments, the transmission ECU 162 controls the transmission 127 based on a transmission pressure sensor. The engine ECU 164 controls an engine 118. The user interface 140 is connected to the main ECU 160. The GPS unit 156 is a conventional GPS unit. In one embodiment, the GPS unit 156 is configured to locate the position of the vehicle 100 within the field 122.

A communication circuit 170 is coupled to the ECU 160 and to the antenna 142. The communication circuit 170 is configured to transmit signals generated by the ECU 160, which in some applications have been generated in response to information submitted by an operator through the user interface 140. The communication circuit 170 is further configured to receive signals from the antenna 142. A memory 172 is operatively coupled to the ECU 160 and is configured to store information. In some embodiments, the communication circuit 170 is used for internal communication among devices or circuits located in the vehicle.

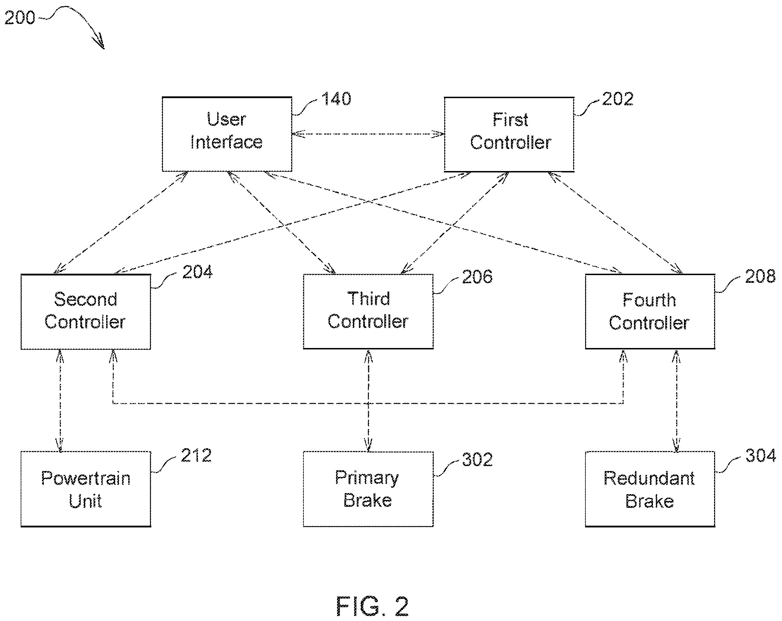

The vehicle 100 in one example is a tractor that includes and/or operates with an autonomy enablement system 200 as illustrated in FIG. 2. FIG. 2 is a block diagram of a functional architecture of an autonomy enablement system 200.

The autonomy enablement system 200 includes a first controller 202, a second controller 204, a third controller 206, and a fourth controller 208. The first controller 202 is communicatively coupled to the second controller 204, the third controller 206, and the fourth controller 208. Similarly, the second controller 204, the third controller 206, and the fourth controller 208 may be communicatively coupled to each of the second controller 204, the third controller 206, and the fourth controller 208. For example, the second controller 204 may be communicatively coupled to the fourth controller 208, as shown. Further, the first controller 202, the second controller 204, the third controller 206, and the fourth controller 208 may each be communicatively coupled to a user interface 140.

The second controller 204 may further be communicatively coupled to a powertrain 212 of the vehicle 100. Further, the second controller 204 may include or be communicatively coupled to a powertrain supervisor (e.g., a drive strategy system). For example, the second controller 204 may be configured to determine at least one of the vehicle 100 is powered on, a manual brake is engaged, and the vehicle 100 is within a selected field boundary (e.g., via a GPS signal). The third controller 206 is configured to control a primary brake 302 (e.g., see FIG. 3). The fourth controller 208 is configured to control a redundant brake 304 (e.g., see FIG. 3). Further the fourth controller 208 may be configured to control a clutch and transmission (e.g., transmission 127) of the vehicle.

While four separate controllers are illustrated, it should be understood that a number less than four may perform the functions described herein or the functionality described herein may be divide among a number of controllers greater than four. For example, the autonomy enablement system 200 includes one or more controllers 202 communicatively coupled to a user interface 140, a powertrain 212 of the vehicle 100, a primary brake 302, and a redundant brake 304. The one or more controllers 202 can be configured to determine at least one of the vehicle 100 is powered on, a manual brake is engaged, and the vehicle 100 is within a selected field boundary (e.g., via a GPS signal). The one or more controllers 202 can be configured to control a primary brake 302 (e.g., see FIG. 3) and a redundant brake 304 (e.g., see FIG. 3).

One or more of the first controller 202, the second controller 204, the third controller 206, and the fourth controller 208 disclosed herein may include or be implemented in one or more processing circuitries such as hardware including logic circuits; a hardware/software combination such as a processor executing software; or a combination thereof. For example, the processing circuitries more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

FIG. 3 illustrates a vehicle (e.g., vehicle 100) including a brake system 300.

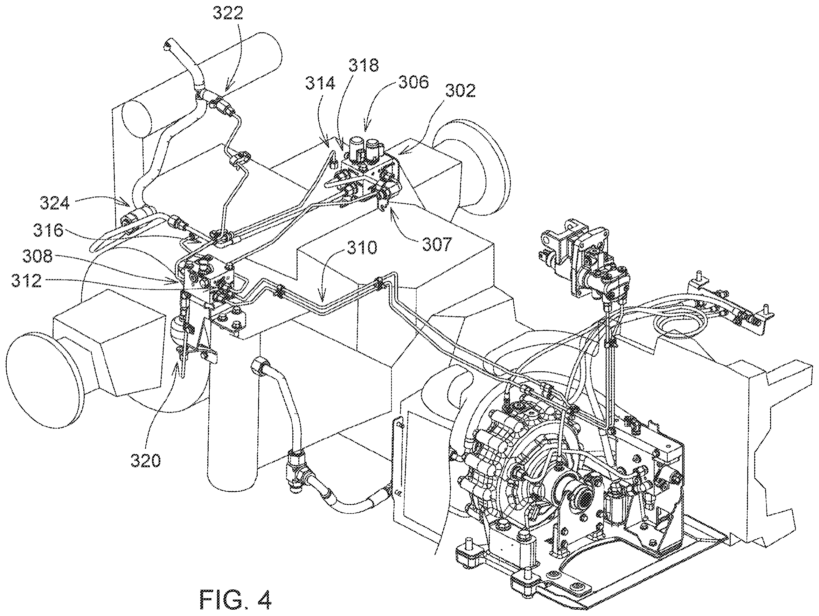

The brake system 300 includes a primary brake 302, a redundant brake 304 and a brake resolution manifold (BRM) 308. The primary brake 302 may be an electrohydraulic brake (e.g., an electrohydraulic service brake (EHSB)). The primary brake 302 may be configured to operate as a primary way to stop the vehicle. As will be described further herein, the primary brake 302 is supplied by the transmission 127 and returns to a differential housing of the vehicle 100 (e.g., see FIG. 4).

The BRM 308 may be positioned above a filter housing of the vehicle. The BRM 308 is configured to operate as a shuttle valve between the primary brake 302 and manual brakes of the vehicle (e.g., in a cabin of the vehicle, not shown). For example, the BRM 308 is in fluid communication with the primary brake 302.

The brake system 300 includes a redundant brake 304. The redundant brake 304 may be a spring actuated brake (e.g., a spring-applied hydraulic release (SAHR)). In some example embodiments, the redundant brake 304 is an electrohydraulic brake. The redundant brake 304 may be configured to operate as a redundant way to stop the vehicle if the primary brake 302 fails to stop the vehicle in autonomy (e.g., a pressure loss occurs as the pump fails). As the mechanism of the redundant brake 304 is spring applied, it is a backup method to stop the vehicle as no oil pressure is required to engage the redundant brake 304. This prevents the tractor from having a redundant electric power supply. Similar to the primary brake 302, the redundant brake 304 is supplied by the transmission 127.

Referring now to FIG. 4, FIG. 4 illustrates a detailed view of a portion of the brake system 300, with particularity to the primary brake 302.

The primary brake 302 includes a primary valve 306. The primary valve 306 may include a proportional valve to control braking in a modulated way and includes an on/off valve to prevent unintended engagement of the brakes. The brake system 300 includes a supply source 307 such that the primary valve 306 is supplied from a 20-bar transmission block.

As described herein, the BRM 308 is configured to operate as a shuttle valve between the primary brake 302 and manual brakes of the vehicle (e.g., in a cabin of the vehicle, not shown). Accordingly, the brake system 300 includes manual brake actuation lines 310 routed between the BRM 308 and the manual brakes, and primary brake valve lines 312 routed between the BRM 308 and the primary valve 306. For manual braking, pressure corresponding with a pedal position 128 of a left or right brake pedal is sent to a left axle brake 314 and a right axle brake 316 via a service brake valve 130 and the BRM 308 (e.g., see FIG.9). For braking with the primary brake 302, the pressure is sent to the left axle brake 314 and the right axle brake 316 depending on the position of the proportional valve.

The brake system 300 further includes a pressure sensor 318. The pressure sensor 318 is operatively coupled to the primary valve 306. The pressure sensor 318 is configured to measure the pressure of the primary valve 306.

The brake system 300 further includes a de-aerator 320. The de-aerator 320 is fluidly coupled to the primary valve 306. For example, oil flows through the primary valve 306 and to the de-aerator 320. The de-aerator 320 is configured to reduce air from the brake system 300 such that the pressure within the brake system 300 is predominantly generated by the oil. Further, the de-aerator 320 is fluidly coupled to the BRM 308 such that the de-aerated oil flows from the de-aerator 320 to the BRM 308 and may pressurize the rear axle brakes (e.g., the left axle brake 314 and the right axle brake 316).

The brake system 300 further includes a vent 322. For example, the vent 322 is an aerated oil vent to hitch return via an orifice-check valve. The orifice-check valve is configured to retain the oil in a service brake system (e.g., for manual braking), thus maintaining the health of the service brake system.

The brake system 300 further includes a primary valve return 324 directing the oil to a differential housing.

In various example embodiments, the vehicle 100 may include a manual lever (not shown) configured to actuate the primary brake 302 from within the vehicle in response to a manual command from an operator.

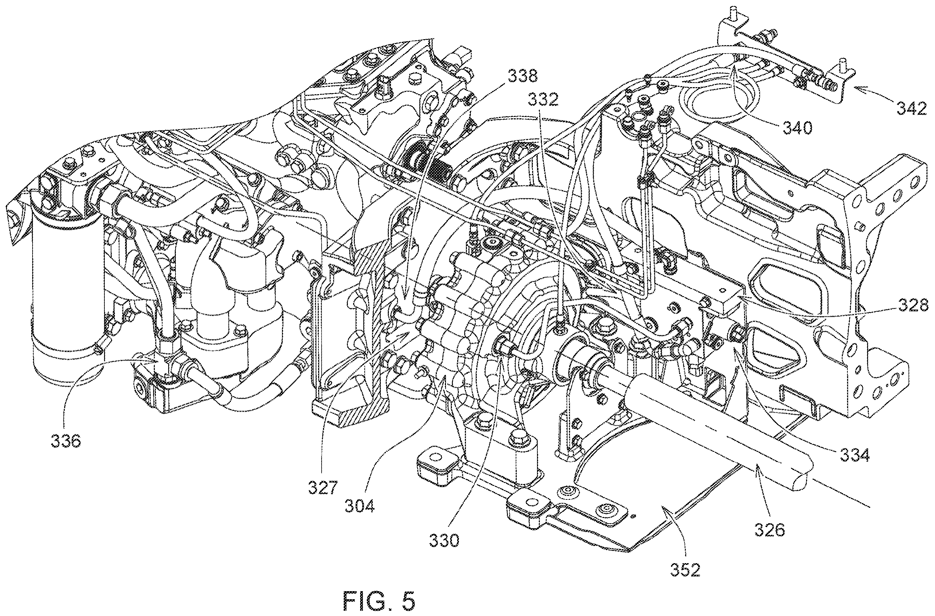

Referring now to FIG. 5, FIG. 5 illustrates a detailed view of a portion of the brake system 300, with particularity to the redundant brake 304.

The brake system 300 includes the redundant brake 304 coupled to a driveshaft 326. For instance, the driveshaft 326 is a mechanical front wheel drive driveshaft coupled to a front axle of the vehicle 100. The redundant brake 304 may further be coupled to an output shaft 327 of the transmission 127. For example, as described further herein, when the redundant brake 304 is engaged, a spring of the redundant brake 304 (e.g., a spring-applied hydraulic release brake) will push the clutch disk toward the casting and will cause friction with the output shaft 327 to bring the vehicle 100 to a stop.

The brake system 300 includes a second manifold 328. The second manifold 328 is configured to operate as an on/off shuttle valve for the redundant brake 304. For example, the second manifold 328 is configured to accommodate disengagement of the redundant brake 304 via a release/actuation line 330. Further, the second manifold 328 includes a sump valve 332 and a supply valve 334. The sump valve 332 and the supply valve 334 are configured to provide a redundancy to prevent unintended engagement. The redundant brake 304 is supplied with oil by a transmission pump of the vehicle 100.

The redundant brake 304 may be coupled to a chassis 352 under the vehicle 100. In various example embodiments, a mid-fuel tank will be removed from a tractor (e.g., a 5ML OOS Deere tractor) to facilitate space for the redundant brake 304. Further the driveshaft 326 may be shortened to facilitate space for the redundant brake 304. Once positioned, hose connections may be made. For example, the brake system 300 includes a supply source pressure relief valve 336 at a pump strainer housing. Further, the brake system 300 includes an oil return 338 at a front of the transaxle of the transmission 127 of the vehicle 100. Additionally, service hoses 340 (e.g., grease hoses, a breather hose, and a tow-mode hose) may be bundled and attached to a bracket 342.

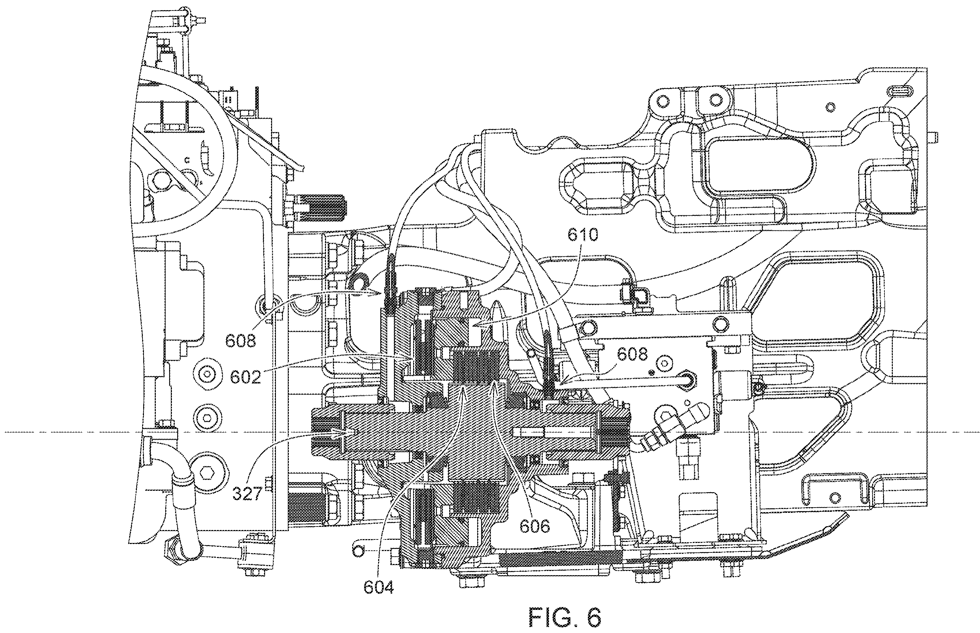

Referring now to FIG. 6, FIG. 6 illustrates a cross-sectional view of the redundant brake 304.

The redundant brake 304 includes a spring 602. The spring 602 may be a Belleville spring. The redundant brake 304 includes at least one clutch disk 604 and at least one spacer disk 606. In some example embodiments, the redundant brake 304 includes three clutch disks 604 and a plurality of spacer disks 606 such that each of the three clutch disks 604 are separated by at least one of the plurality of spacer disks 606. Further, the redundant brake 304 includes a grease port 608 and a release actuator 610. The grease port 608 provides a lubricant to the at least one clutch disk 604, the at least one spacer disk 606, and the release actuator 610. When the supply valve 334 is actuated, the oil flows through and pressurizes the redundant brake 304. Under a pressurized, or disengaged, state, the release actuator 610 is released as the spring 602 is compressed by the pressure of the oil, and friction is not applied between a static casting mounting on the tractor chassis and the rotating clutch disks 604. To engage the redundant brake 304, the sump valve 332 and the supply valve 334 reroute the oil, thus releasing the pressure from the redundant brake 304, and the spring 602 will apply force and push the clutch disks 604 toward the casting to cause friction with the casting and bring the vehicle 100 to a stop.

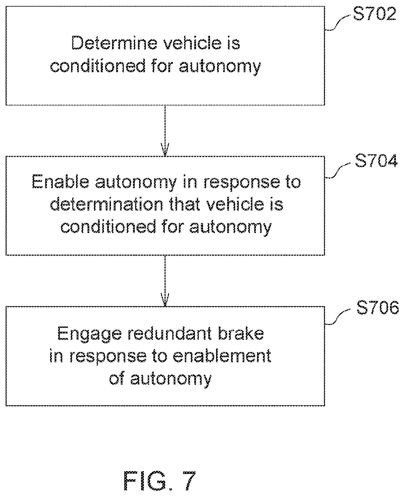

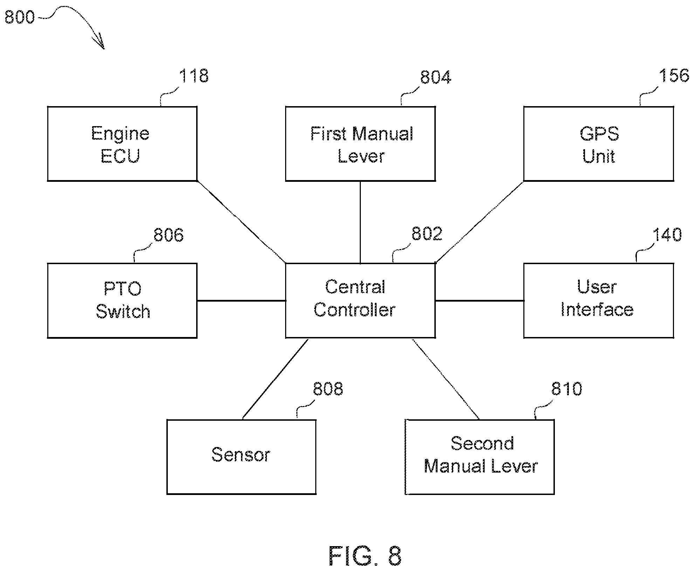

FIG. 7 is a flow chart of a method of operating an autonomy enablement system according to one or more example embodiments. FIG. 8 is a block diagram of an autonomy enablement system according to one or more example embodiments.

The flow chart of FIG. 7 is implemented by the autonomy enablement system 800 of FIG. 8. At S702, the method includes determining whether the vehicle is conditioned for autonomy. For example, the vehicle may be disabled (e.g., idling, not operating autonomously, etc.), until an operator turns autonomy from off to on via the user interface 140.. Accordingly, at least one controller, or a central controller 802, of the autonomy enablement system 800 determines the vehicle is conditioned for autonomy by determining the vehicle is powered on via the engine ECU 164, a first manual lever 804 is engaged, and the vehicle is within a selected field boundary via the GPS unit 156. For example, the vehicle may be key-ed on and the engine started by a supervisor to bring it to a desired location and placed within the selected field boundary with available GPS signal. The selected field boundary may be a boundary stored in a memory and based on a preset geofence created for each job and/or location. Accordingly, the method may include determining the vehicle is within the selected field boundary based on a GPS signal. The operator may then place the vehicle in park, and the engine will remain running with the key on. In various example embodiments, the vehicle may include the first manual lever 804, or range lever, configured to actuate a mechanical brake from within the vehicle in response to a manual command from an operator (e.g., the operator controls the first manual lever). The vehicle is required to be in mechanical park prior to the enablement of autonomy. If the mechanical park system is not engaged by the operator, autonomy cannot be enabled. Accordingly, the central controller 802, or a first controller (e.g., first controller 202), is configured to check if the mechanical brake (e.g., the first manual lever 804) is engaged to ensure autonomy is only enabled when the manual lever is in park. Once these prerequisites are met, the vehicle is in a state ready to be enabled for autonomy.

The method may further include communicating the determination that the vehicle is conditioned for autonomy to a user interface (e.g., user interface 140). In various example embodiments, the user interface 140 may be a Gen4 or 5 John Deere CommandCenter or Universal application (Gen4/5 application), or display. In various example embodiments, the user interface 140 is an Instrument Cluster, e.g., a dashboard display. In other example embodiments, the user interface 140 includes a first user interface and a second user interface. In other example embodiments, the first user interface may include the Gen4/5 application, or display, and the second user interface may include the Instrument Cluster, or dashboard display. In various example embodiments, the central controller 802 includes a user interface controller, or processor, configured to control the user interface 140. In various example embodiments, the user interface 140 includes a user interface controller, or processor, configured to control the user interface 140. Accordingly, the user interface controller is communicatively coupled to the central controller 802 and/or the first controller 202, the second controller 204, the third controller 206, and the fourth controller 208.

At S704, the method includes enabling autonomy in response to the determination that the vehicle is conditioned for autonomy. Autonomy may be enabled via the user interface (e.g., a soft key button on the display). For example, a user may select autonomy on the user interface. The vehicle briefly enters a stationary state for a predetermined duration of time before beginning a warning sequence. In some example embodiments, the predetermined duration of time may be a brief period of time (e.g., 100 milliseconds) wherein the vehicle 100 prepares for the next state and the user may exit the vehicle. Subsequently, a warning sequence is implemented to warn the operator and/or bystanders that autonomous motion is about to begin. For example, the method may include triggering field lights in response to enabling autonomy. In various example embodiments, the method includes communicating that autonomy 1s enabled to the user interface. The warning sequence may be a duration of 10 seconds.

Subsequently, the vehicle 100 begins operating autonomously. Accordingly, at S706, the method includes engaging a redundant brake (e.g., redundant brake 304) in response to the enablement of autonomy. Particularly, the central controller 802, or a second controller (e.g., fourth controller 208), is configured to engage the redundant brake in response to the enablement of autonomy. As described herein, engaging the redundant brake causes a spring of the redundant brake (e.g., a spring-applied hydraulic release brake) to push a clutch disk of the redundant brake toward a static casting mounting on a vehicle chassis and will cause friction with casting to hold the vehicle stationary. In various example embodiments, the method includes communicating the engagement of the redundant brake to the user interface. For example, the second controller is configured to communicate the engagement of the redundant brake to the user interface. In response to the engagement of the redundant brake, the method includes controlling the user interface to display instructions to disengage the manual brake (e.g., the user interface will instruct the operator to move the manual lever from "park" to a "range"). For example, the central controller 802, or specifically the fourth controller 208, may communicate to the user interface controller that the redundant brake 304 is engaged, and the user interface controller initiates the display. The communication that the redundant brake 304 is engaged may be displayed on the first user interface or the second user interface. Engaging the redundant brake ensures that the vehicle cannot roll away. This allows the operator to put the manual range lever out of park and into a desired range while the redundant brake remains engaged until it receives a command to disengage (e.g., from the first controller 202). The desired range is set by selecting a set of gears in the transmission such that a range is isolated and speed may be controlled within that range.

In various example embodiments, the method includes determining whether a Power Take-Off (PTO) switch 806 is engaged. For example, the central controller 802, or the second controller 204, is configured to determine whether the PTO switch 806 is engaged. The central controller 802 may receive a signal from a sensor configured to measure the PTO speed, an operator physically observing, and/or a PTO state message (e.g., error, not available, etc.). To ensure that the PTO is running during autonomy, the operator must pull the position indicating PTO switch and put it in an "ON" position. If the vehicle does not include PTO fender switches, the PTO engages directly. However, if there are PTO fender switches, the PTO will not engage directly and wait for a command to engage when autonomous motion starts.

In various example embodiments, the method includes actuating the PTO in response to determining the PTO switch is engaged and detecting autonomous motion via a sensor 808. For example, the central controller 802, or the fourth controller 208, is configured to actuate the PTO.

In various example embodiments, the method includes communicating, via the user interface, that the operator must keep a second manual lever 810 (e.g., a left-hand reverser) in "neutral" and to not put it into "forward." If the operator puts the left-hand reverser into "forward," the autonomy will not be allowed to start. Accordingly, at least one of the central controller 802, the first controller 202 and/or the second controller 204 is configured to determine the position of the left-hand reverser.

In various example embodiments, the method includes rece1vmg input indicating whether an operator is in the vehicle (e.g., via the central controller 802 or the second controller 204). For example, after the operator enables autonomy, the user interface will prompt the operator to enable Out of Seat (OOS)/Remote PTO operation. To enable OOS, the key must be kept in the "ON" position and approval for autonomy can only be done on the mobile app from 250ft or closer to the machine. Further, the operator indicates "Present." If the operator would like to supervise/ride along, the operator must keep the key in the "ON" position and approval can only be done with the "AUTO" button in the cab. Further, the operator indicates "Not Present." This cannot be changed unless autonomy is turned off.

In various example embodiments, the method includes communicating (e.g., via the first controller 202) a disengage command (e.g., to the fourth controller 208) in response to detecting autonomous motion. For example, the autonomous motion may be detected via a sensor (e.g., sensor 808) or may be detected based on a command to start motion. Accordingly, the redundant brake may be disengaged. For example, the second controller (e.g., the fourth controller) disengages the redundant brake.

Once autonomy has been approved and properly enabled, the vehicle is driven by preset autonomous sequences and thus the vehicle may be operated autonomously.

After at least one controller determines normal operations shall resume (e.g., the autonomous job is done, a timer has lapsed, a hazard is detected, etc.), while the redundant brake is still engaged to keep the vehicle stationary and prevent roll away based on the engagement of the redundant brake at S706, the method includes displaying on the user interface that the redundant brake is still engaged. As long as the redundant bake is engaged, the operator cannot manually initiate motion. Thus, the operator puts the manual lever into "park" which indicates that the operator has gained back control of the vehicle and puts the vehicle in the safe state by engaging the mechanical brake. Accordingly, the method includes disengaging the redundant brake (e.g., via the fourth controller 208), as it is no longer needed to keep the vehicle stationary. Additionally, the operator may set the PTO-Switch to inactive and resume manual operation of the vehicle.

While method of operating an autonomy enablement system is described with respect to FIGS. 7-8 as being implemented on a central controller 802, the autonomy enablement system 800 may include one or more controllers. For example, the autonomy enablement system 800 may include a first controller, a second controller, a third controller, and a fourth controller (e.g., see the first controller 202, the second controller 204, the third controller 206, and the fourth controller 208 of FIG. 2). In other words, the central controller 802 disclosed herein may include or be implemented in one or more processing circuitries such as hardware including logic circuits; a hardware/software combination such as a processor executing software; or a combination thereof. For example, the processing circuitries more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

## Claims

1. An autonomy enablement system for a vehicle, the system (800) comprising at least one controller configured to determine the vehicle (100) is conditioned for autonomy, the vehicle (100) being conditioned for autonomy when at least a manual brake is engaged, enable autonomy in response to the determination that the vehicle (100) is conditioned for autonomy, and engage a redundant brake (304) in response to the enablement of autonomy.

2. The autonomy enablement system according to claim 1, **characterized in that** the at least one controller further determines the vehicle (100) is conditioned for autonomy by determining the vehicle (100) is powered on and the vehicle (100) is within a selected field (122) boundary.

3. The autonomy enablement system according to claim 2, **characterized in that** the at least one controller determines the vehicle (100) is within the selected field (122) boundary based on a GPS signal.

4. The autonomy enablement system according to claim 3, **characterized in that** the at least one controller includes a first controller (202) configured to determine the vehicle (100) is conditioned for autonomy.

5. The autonomy enablement system according to claim 4, **characterized in that** the first controller (202) is configured to communicate the determination that the vehicle (100) is conditioned for autonomy to a user interface (140).

6. The autonomy enablement system according to claim 5, **characterized in that** the at least one controller includes a second controller (204) configured to engage the redundant brake (304) in response to the enablement of autonomy.

7. The autonomy enablement system according to claim 6, **characterized in that** the second controller (204) is configured to communicate the engagement of the redundant brake (304) to the user interface (140).

8. The autonomy enablement system according to claim 7, **characterized in that** the at least one controller is further configured to control the user interface (140) to display instructions to disengage the manual brake in response to the engagement of the redundant brake (304).

9. The autonomy enablement system according to claim 8, **characterized in that** the at least one controller is further configured to determine a Power Take-Off switch (806) is engaged, and actuate the PTO switch (806) in response to determining the Power Take-Off switch (806) is engaged and detecting autonomous motion.

10. The autonomy enablement system according to claim 9, **characterized in that** the at least one controller is further configured to receive input indicating whether an operator is in the vehicle (100).

11. The autonomy enablement system according to claim 10, **characterized in that** the first controller (202) is configured to communicate a disengage command to the second controller (204) in response to detecting autonomous motion or a command to start motion such that the second controller (204) disengages the redundant brake (304).

12. A vehicle comprising a redundant brake (304), the redundant brake (304) being spring (602) actuated; and at least one controller configured to determine the vehicle (100) is conditioned for autonomy, the vehicle (100) being conditioned for autonomy when at least a manual brake is engaged, enable autonomy in response to the determination that the vehicle (100) is conditioned for autonomy, and engage the redundant brake (304) in response to the enablement of autonomy.

13. A method of enabling autonomy a vehicle, the method comprising determining the vehicle (100) is conditioned for autonomy, the vehicle (100) being conditioned for autonomy when at least a manual brake is engaged, enabling autonomy in response to the determination that the vehicle (100) is conditioned for autonomy, and engaging a redundant brake (304) in response to the enablement of autonomy.

14. The method according to claim 13, **characterized in that** determining the vehicle (100) is conditioned for autonomy includes determining the vehicle (100) is powered on and the vehicle (100) is within a selected field (122) boundary based on a GPS signal.

15. The method according to claim 14, **characterized by** further comprising communicating the determination that the vehicle (100) is conditioned for autonomy to a user interface (140), communicating the engagement of the redundant brake (304) to the user interface (140), controlling the user interface (140) to display instructions to disengage the manual brake in response to the engagement of the redundant brake (304), determining a Power Take-Off (PTO) switch (806) is engaged; actuating the PTO in response to determining the PTO switch (806) is engaged and detecting autonomous motion, receiving input indicating whether an operator is in the vehicle (100), and detecting autonomous motion and disengaging the redundant brake (304) in response to detecting autonomous motion or a command to start motion.
